# EUROPÄISCHE PATENTSCHRIFT

(11) **EP 1 953 424 B1**
(45) Veröffentlichungstag und Bekanntmachung des Hinweises auf die Patenterteilung: **02.11.2011**
(21) Anmeldenummer: 08001118.2
(22) Anmeldetag: 22.01.2008
(51) Int. Cl.: F16H 61/06, F16H 61/686

(54) **Verfahren zur Steuerung des Schaltdrucks in einem Stellglied eines elektrohydraulisch gesteuerten Kraftfahrzeuggetriebes**
Method for controlling the switching pressure in an actuator of an electro-hydraulically controlled motor vehicle transmission
Procédé de commande électro-hydraulique de la pression de commutation dans un élément de friction d'une boîte de vitesses de véhicule automobile

(30) Priorität: 31.01.2007 DE 102007005662
(43) Veröffentlichungstag der Anmeldung: 06.08.2008
(73) Patentinhaber: Voith Patent GmbH, 89522 Heidenheim (DE)
(72) Erfinder: Höfig, Bernhard, 89518 Heidenheim (DE); Hudelmaler, Wolfgang, 81247 München (DE)
(74) Vertreter: Dr. Weitzel & Partner

(56) Entgegenhaltungen:
- EP-A2- 0 435 377
- US-A1- 2002 116 109
- US-B1- 6 503 165

## Beschreibung

Die Erfindung betrifft ein Verfahren zur Steuerung des Schaltdrucks in einem Stellglied, vorliegend auch Schaltelement genannt, eines elektrohydraullsch gesteuerten Getriebes eines Kraftfahrzeuges.

EP 0 435 377 A2 beschreibt ein Verfahren zum Pegeln der Änderung in einem Automatikgetriebe eines Fahrzeugs von einer ausrückenden, flulddruckbetrlebeneri, drehmomentübertragenden Vorrichtung, welche einem niedrigeren Übersetzungsverhältnis zugeordnet ist, zu einer einrückenden, flulddruckbetrlebenen, drehmomentübertragenden Vorrichtung, die einem höheren Übersetzungsverhältnis zugeordnet ist. Die hieraus bekannten Merkmale sind im Oberbegriff des Anspruchs 1 zusammengefasst.

In elektrohydraulisch gesteuerten Kraftfahrzeuggetrieben wird ein Wechsel der Gangstufe durch Ansteuern bestimmter Stellglieder, wie Kupplungen und Bremsen, mit einem vorgegebenen Hydraulikdruck bewirkt. Die durch den Hydraulikdruck betätigten Stellglieder stellen dann einen Kraftschluss zwischen vorbestimmten Getriebebauteilen, beispielsweise Radsätzen, oder dem Gehäuse des Getriebes her.

Um den gewünschten Druck beziehungsweise einen vorgegebenen Druckverlauf im Stellglied, vorliegend Schaltdruck genannt, einzustellen, ist jedes Stellglied über ein elektromagnetisches Schaltventil alternativ mit einem druckgeregelten Hydraulikkreis beziehungsweise einer Druckleitung oder mit einer Drucksenke verbindbar. Die Schaltstellung der Schaltventil wird von einem Steuergerät gesteuert.

Der Druck in dem Hydraulikkreis beziehungsweise der Druckleitung ist in der Regel regelbar, wobei die Regelung mittels eines DrucKregelventlls, das die Druckleitung beziehungsweise den Hydraulikkreis mit einer Druckquelle verbindet, und welches ebenfalls von dem Steuergerät angesteuert werden kann, bewirkt wird.

Um einen gewünschten Kraftschluss mit einem Stellglied, beispielsweise in einer Kupplung, insbesondere Lamellenkupplung, oder einer Bremse, zu bewirken, wird das Stellglied über das ihm zugeordnete Schaltventil mit dem Hydraulikkreis beziehungsweise der Druckleitung verbunden. Nach der Verbindung wird Druckmedium in den Druckraum des Stellglieds und in mit diesem verbundene Räume eingeleitet, so dass sich das Stellglied mit dem Druckmedium füllt. Nach der im wesentlichen vollständigen Füllung des Stellglieds steigt der Druck (Schaltdruck) in dem Druckraum an, so dass das Stellglied betätigt wird, Die gesamte Ansteuerung eines Stellglieds setzt sich somit aus den Phasen "Befüllen" und "Betätigen" zusammen.

Beim Absteuern eines Stellglieds (nämlich jenes der herauszunehmenden Gangstufe) wird das Stellglied über das ihm zugeordnete Schaltventil mit der Drucksenke verbunden, so dass sich das Stellventil entleert. Diese Entleerung erfolgt relativ rasch, so dass die Kraftübertragung nahezu sofort unterbrochen wird.

Die für den Wechsel der Gangstufe in dem Getriebe erforderliche Zeit wird somit im wesentlichen durch die Ansteuerung des Stellglieds der kommenden Gangstufe bestimmt und ergibt sich aus der Addition der für die beiden Phasen "Befüllen" und "Betätigen" benötigten Zeiten. Hohe Drücke in dem Hydrauliksystem beziehungsweise der Druckleitung verkürzen zwar die Füllzeiten, bergen jedoch die Gefahr von unerwünschten Schaltstößen. Niedrige Drücke in dem Hydrauliksystem beziehungsweise der Druckleitung führen hingegen zu langen Zeiträumen für den Wechsel der Gangstufen.

Ferner weisen die Schaltventile sowie die das Druckmedium stromabwärts der Schaltventile führenden Leitungen und die Stellglieder selbst ein von Fertigungsstreuungen behaftetes oder alterungsbedingtes variables Füllvolumen auf. Ebenso ist dem Stellglied ein zur Ausführung einer geforderten Stellbewegung erforderliches, von Fertigungsstreuungen behaftetes oder alterungsbedingtes variables Betätigungsvolumen des Druckmediums zuzuführen, Die Streuung des zu befüllenden Volumens und des Mediumvolumens hat ebenfalls einen nicht zu vernachlässigenden Einfluss auf die Füllzeit der einzelnen Stellglieder.

Um die Befüllung eines Stellglieds zu beschleunigen, schlägt die EP 0 524 450 B1 vor, mit einer mittels einem Schaltventil bewirkten Ansteuerung des Stellglieds aus dem drucklosen Zustand heraus über ein Druckregelvontil zeitlich begrenzt ein gegenüber dem beim Wechseln der Gangstufe eingeregelten Druck weiter erhöhten Druck im Hydraulikkreis einzustellen, welcher ausgehend von einem voreinstellbaren oder voreingestellten Grundwert im Laufe des Betriebs des Getriebes pro Ansteuervorgang selbsttätig schrittweise derart an einen Zielwert angepasst wird, dass die Eingangsdrehzahl des Getriebes oder die Drehzahl einer dem Getriebe vorgeschalteten Antriebsmaschine einem vorgegebenen Bewegungsablauf folgt. Dieser zeitlich erhöhte Druck wird in Form eines Füllstoßes oder Füllpulses bereitgestellt, dessen Höhe von den einzelnen Gangstufen und der Richtung des Gangstufenwechsels abhängig ist. Der Füllpuls kann ferner drehzahlabhängig sein, Der Füllpuls weist in seinem zeitlichen Verlauf eine Rechteckform auf, das heißt der Druck wird von dem Normaldruck sprunghaft auf den erhöhten Füllpulsdruck angehoben, wobei dieser angehobene Füllpulsdruck solange konstant aufrechterhalten wird, bis das Stellglied befüllt ist.
Wenn das Stellglied befüllt ist, wird der Druck sprunghaft wieder abgesenkt.

Der zeitliche Verlauf des Schaltdrucks vom Beginn eines Schaltvorgangs bis zum Ende des Schaltvorgangs ist insgesamt aus zwei hintereinandergeschalteten für sich jeweils konstant gehaltenen Druckverläufen zusammengesetzt, nämlich dem anfänglichen Füllstoß und einem sich dem Füllstoß anschließenden gegenüber dem Normaldruck leicht erhöhten Druck.

Zwar ist es mit dieser Lösung möglich, die Schaltzeiten dadurch zu reduzieren, dass die Ansprechzeit, das heißt die Zeitdauer nach dem Öffnen des gehenden Schaltelementes bis zum Auftreten einer getriebeseitigen Drehzahländerung verkürzt wird. Jedoch sind geringfügige Ansprechzeitveränderungen nur durch erhebliche Veränderungen des Startdruckes möglich und die vorgeschlagene Adaption stößt schnell an ihre Grenzen.

Ein wesentliches Problem der vorgeschlagenen Lösung besteht des Weiteren darin, dass bei Anliegen eines Follpulses der Druck zwar bis auf einen Maximalwert ansteigt, jedoch die Wirkung des Füllpulses nicht detektierbar ist, da in der Füllphase des kommenden Schaltelementes, innerhalb von welcher der Füllpuls aufrechterhalten wird, eine Änderung des Druckes im Stellglied noch keine Auswirkung auf den Drehzahlverlauf der Antriebsmaschine ausübt. Der Druck zum Ende der Füllphase, vorliegend als Startdruck bezeichnet, wird jedoch durch die Höhe des Füllpulses bestimmt. Dieser Startdruck beeinflusst das beim Betätigen des Stellglieds durch das entsprechende Schaltelement abnehmbare Antriebsmoment. Die Änderung des Druckes kann somit zu einer Verschlechterung der Schaltqualität durch Schaltstöße führen.

Insgesamt zeigt sich somit, dass die Steuerung des Betätigungsdrucks in einem Stellglied eines elektrohydraulisch gesteuerten Kraftfahrzeuggetriebes noch nicht optimal und unabhängig von Fertigungstoleranzen und alterungsbedingten Toleranzen exakt reproduzierbar ist.

Der Erfindung liegt die Aufgabe zugrunde, ein Verfahren zur Steuerung des Schaltdruckes in einem Stellglied eines elektrohydraulisch gesteuerten Kraftfahrzeuggetriebes anzugeben, weiches hinsichtlich der Schaltzeiten und dem Schaltkomfort gegenüber dem beschriebenen Stand der Technik verbessert ist und insbesondere fertigungsbedingte oder alterungsbedingte Einflüsse auf den Schaltvorgang optimal durch Adaption des Schaltdruckes kompensiert werden.

Die erfindungsgemäße Lösung ist durch die Merkmale des Anspruchs 1 charakterisiert. Vorteilhafte Ausgestaltungen werden in den Unteransprüchen beschrieben.

Erfindungsgemäß wird bei einem Verfahren zur Steuerung des Schaltdruckes in Stellgliedern eines elektrohydraulisch gesteuerten Kraftfahrzeuggetriebes, wobei das Getriebe an der Antriebsmaschine des Kraftfahrzeugs in einer Triebverbindung angeschlossen oder anschließbar ist, während des Gangstufenwechsels von einer gehenden Gangstufe zu einer kommenden Gangstufe, wobei der Gangstufenwechsel durch Vorliegen eines entsprechenden Signals eingeleitet wird, das aktuelle von der Antriebsmaschine abgebbare Moment erfasst. Die Momentenerfassung kann eine unmittelbare oder mittelbare sein.

Aus dem erfassten Moment wird ein Sollwert für den Startdruck des Schaltdruckes bestimmt. Der Startdruck ist jener Druck, der sich im Stellglied der kommenden Gangstufe am Ende der Füllphase dieses Stellglieds und somit am Anfang der Betätigungsphase des Stellglieds einstellt.

Erfindungsgemäß ist demnach der Startdruck abhängig von dem von der Antriebsmaschine abgebbaren Moment, und es kann ein optimaler Schaltkomfort erreicht werden.

Die Überschneidzeit zwischen dem Beginn des Füllens des Stellglieds (oder Schaltelements) der kommenden Gangstufe und dem Lösen des Stellglieds (des Schaltelements) der gehenden Gangstufe, wobei das Lösen optimalerweise exakt mit dem Ende der Füllphase und somit bei Vorliegen des gewünschten Startdruckes stattfinden soll, ist durch Einstellen eines bestimmten Fülldruckverlaufes variierbar. Der Fülldruckverlauf ist der Verlauf des Drucks unmittelbar hinter dem Schaltventil, über welches das entsprechende Stellglied mit Hydraulikmedium während der Füllphase befüllt wird. Der Fülldruck kann auch als Steuerdruck bezeichnet werden, welcher durch das Schaltventil, das hierzu einen entsprechenden proportionalen Regelbereich aufweist, eingestellt wird. Während der Füllphase, die vorteilhaft exakt mit der Überschneidzeit zusammenfallen soll, ist der Fülldruck beziehungsweise Steuerdruck hinter dem Schaltventil größer als der Schaltdruck im Stellglied, Mit zunehmender Befüllung des Stellglieds nimmt die Differenz zwischen dem Fülldruck und dem Schaltdruck ab, bis sie zu Beginn der Betätigungsphase, bei welcher im Stellelement der Startdruck anliegt, gleich oder im wesentlichen gleich Null ist.

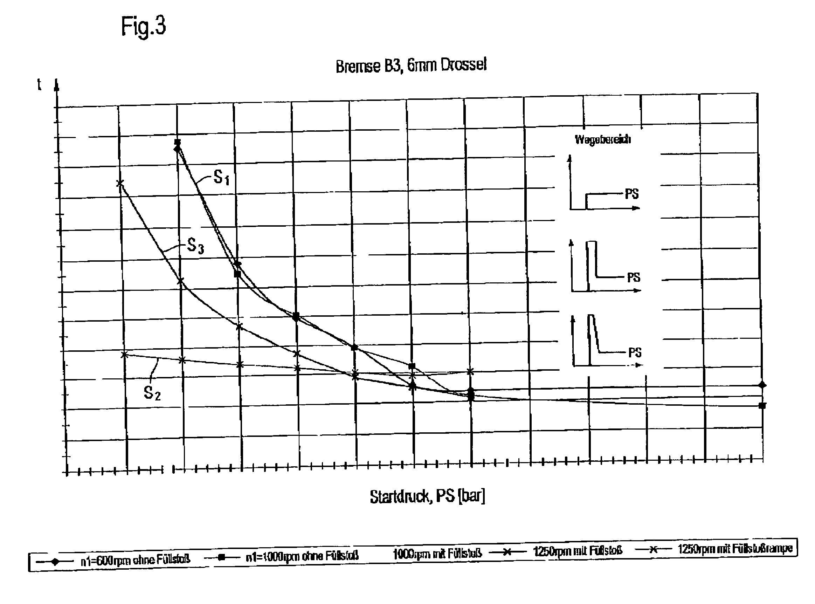

Die Überschneidzeit kann vorteilhaft als Funktion des Sollwertes des Startdruckes in einer Steuereinrichtung hinterlegt sein, so dass auf diese hinterlegte Funktion, wobei der Begriff Funktion auch eine Tabelle oder sonstige Zuordnung einer Überschneidzeit zu dem Sollwert des Startdruckes umfasst, zurückgegriffen werden kann, um eine gewünschte Überschneidzeit einzustellen. Beispielsweise können eine oder mehrere Kennlinien, insbesondere für jedes Stellglied, in der Steuereinrichtung hinterlegt werden, und diese Kennlinien können dann bei Inbetriebnahme des Getriebes oder während des Betriebs des Getriebes adaptiert werden, um die sich tatsächlich einstellende Überschneidzeit an eine gewünschte Überschneidzeit anzupassen. Das bedeutet, dass durch Adaption der Kennlinie, insbesondere durch Ändern deren Verlaufs, wie später beispielsweise noch mit Bezug auf die Figur 3 beschrieben wird, dafür gesorgt wird, dass immer auf den geeigneten einzustellenden Fülldruckverlauf zurückgegriffen werden kann, welcher in Abhängigkeit des Sollwerts des Startdruckes eingestellt werden soll, um die gewünschte Überschneidzeit zu erreichen.

Die geeignete Festsetzung des Startdruckes in Abhängigkeit des Antriebsmaschinenmoments stellt zum Beispiel sicher, dass ein Durchgehen der Antriebsmaschine, das heißt eine unerwünschte Drehzahlsteigerung der Antriebsmaschine, zuverlässig vermieden wird. Zugleich kann ein unerwünschtes Drücken der Antriebsmaschine, das heißt eine unerwünschte Drehzahlminderung der Antriebsmaschine, verhindert werden.

Der Sollwert des Startdrucks kann beispielsweise in Form einer Kennlinie in einer Steuer- und/oder Regeleinrichtung hinterlegt werden. Aus dieser Kennlinie ergibt sich somit der einzustellende Startdruckwert für den Schaltdruck, welcher vorteilhaft gezielt durch die Überschneidzeit zwischen dem Beginn des Füllens des kommenden Schaltelementes, das heißt dem Stellglied der kommenden Gangstufe, bis zum Öffnen des gehenden Schaltelementes, das heißt dem Stellglied der gehenden Gangstufe, und/oder dem vorgegebenen Verlauf des Folldrucks einstellbar ist.

Zum besseren Verständnis sollen nachfolgend noch einmal die Definitionen der einzelnen Drücke beziehungsweise Zeiten zusammengefasst werden:
- Schaltdruck: Druck- oder Druckverlauf, welcher während des Gangstufenwechsels unmittelbar an dem Stellglied der kommenden Gangstufe anliegt;
- Startdruck: Druck im Stellglied der kommenden Gangstufe am Ende der Füllphase beziehungsweise zu Beginn der Betätigungsphase;
- Fülldruck: Druck- oder Druckverlauf, der unmittelbar hinter dem Schaltventil eingestellt wird, um den Füllvorgang des Stellelements der kommenden Gangstufe zu beeinflussen;
- Überschneidzeit: Zeitdauer zwischen dem Beginn des Füllens des Stellglieds der kommenden Gangstufe bis zum Öffnen (Entlasten) des Stellglieds der gehenden Gangstufe;
- Ansprechzeit: Zeitdauer nach dem Öffnen des Stellglieds der gehenden Gangstufe bis zum Auftreten einer getriebeseitigen Drehzahländerung.

Durch Vorgabe eines vorbestimmten Fülldruckverlaufs ist es erfindungsgemäß möglich, die Überschneidzeit zwischen einem minimalen und einem maximalen Wert einzustellen. Der Minimalwert und der Maximalwert können fest vorgegeben werden, oder sie ergeben sich aufgrund bestimmter vordefinierter Fülldruckverläufe, auch als Fülldruckgeometrien bezeichnet, bei der Befüllung des entsprechenden Stellglieds.

Insbesondere kann für ein bestimmtes Stellglied oder für eine bestimmte Getriebebauart eine Basiskennlinie für den einzustellenden Fülldruckverlauf vorgegeben werden, die während des Kraftfahrzeugbetriebs adaptiert werden kann, um den gewünschten Startdruck beziehungsweise die gewünschte Überschneidzeit zu erreichen.

Der Fülldruckverlauf kann einen Füllstoß zu Beginn der Befüllungsphase umfassen, dessen Geometrie die Überschneidzeit entscheidend beeinflusst. Der FUllstoß kann sowohl hinsichtlich seiner Höhe als auch hinsichtlich seines zeitlichen Verlaufs variiert werden. Selbstverständlich sind auch Fülldruckverläufe ohne Füllstoß möglich.

In einem besonders einfachen Fall wird ein konstanter Fülldruck während der Füllphase eingestellt. Hierdurch vergeht eine relativ lange Zeitspanne, bis sich der gewünschte Startdruck, ab welchem mit der Betätigung des Stellglieds begonnen wird, einstellt. Die notwendige Überschneidzeit, während welcher das Stellglied der gehenden Gangstufe noch geschlossen ist und das Stellglied der kommenden Gangstufe noch nicht voll befüllt ist, ist entsprechend lang.

Bei Vorsehen eines sehr hohen, abrupt startenden und endenden Füllstoßes kann eine relativ kurze Überschneidzeit erreicht werden, die notwendig ist, um einen bestimmten Startdruck einzustellen.

Bei beiden beschriebenen Fülldruckverläufen sind die Möglichkeiten der Überschneidzeiteinstellung begrenzt. So bietet der über der Zeit konstante Fülldruckverlauf nur die Adaptionsmöglichkeit der Überschneidzeit über die Höhe des gewählten Fülldrucks. Auch bei Vorsehen eines konstanten Füllstoßes bleiben nur die Adaptionsmöglichkeiten, dass die Höhe des Füllstoßes selber und die konstante Höhe des Druckverlaufes im Anschluss an den Füllstoß verändert werden können.

Gemäß einer besonders vorteilhaften Ausführungsform der Erfindung wird daher ein Fülldruckverlauf vorgegeben, der einen Füllstoß beziehungsweise eine sprunghafte oder stark ansteigende Druckerhöhung mit anschließender rampenförmiger Druckverminderung mit stetig abfallendem Druck bis zum Erreichen des gewünschten Startdruckes umfasst. In Abhängigkeit der Steigung der Rampe, welche beispielsweise im Bereich von 0,02 bis 0,04 bar/ms liegt, ergibt sich eine wirkungsvolle Adaptionsmöglichkeit, um die gewünschte Überschneidzeit beziehungsweise den gewünschten Startdruck einzustellen.

Insbesondere kann pro Schaltelement beziehungsweise pro Stellglied des Getriebes eine Kennlinie für den Fülldruckverlauf vorgegeben werden, welche adaptierbar ist, um Toleranzen im zu befüllenden Volumen des Stellglieds, beim zur Verfügungstellen des füllenden Volumens oder im Stellweg des Stellglieds (auch als Lüftspiel bezeichnet) auszugleichen. Werden Abweichungen von dem gewünschten Startdruck beziehungsweise der gewünschten Überschneidzeit festgestellt, kann die Kennlinie des Fülldruckverlaufs des entsprechenden Stellglieds adaptiert werden, beispielsweise indem die Steigung der Rampe vom erhöhten Fülldruck zum Startdruck angepasst wird,

Die erfindungsgemäße Lösung wird nachfolgend anhand eines Ausführungsbeispiels und den Figuren näher erläutert. Darin ist im Einzelnen folgendes dargestellt:
- Figuren 1a bis 1c: verdeutlichen die Problematiken einer Ausführung von über Schaltventile angesteuerten Stellgliedern;
- Figur 2: verdeutlicht das Adaptionskonzept beziehungsweise die Adaptionskennlinie;
- Figur 3: verdeutlicht die in einer Steuereinheit hinterlegten Schaltkennlinien für unterschiedliche Schaltelemente;
- Figur 4: verdeutlicht anhand eines Signalflussbildes den Ablauf eines Verfahrens gemäß einer erfindungsgemäßen Ausgestaltung zur Einstellung des Startdruckes.

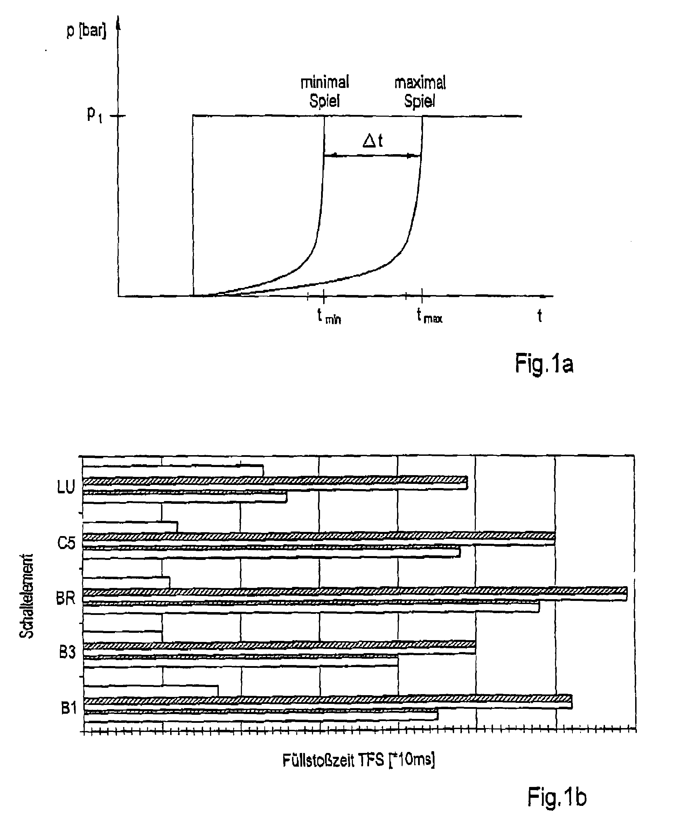

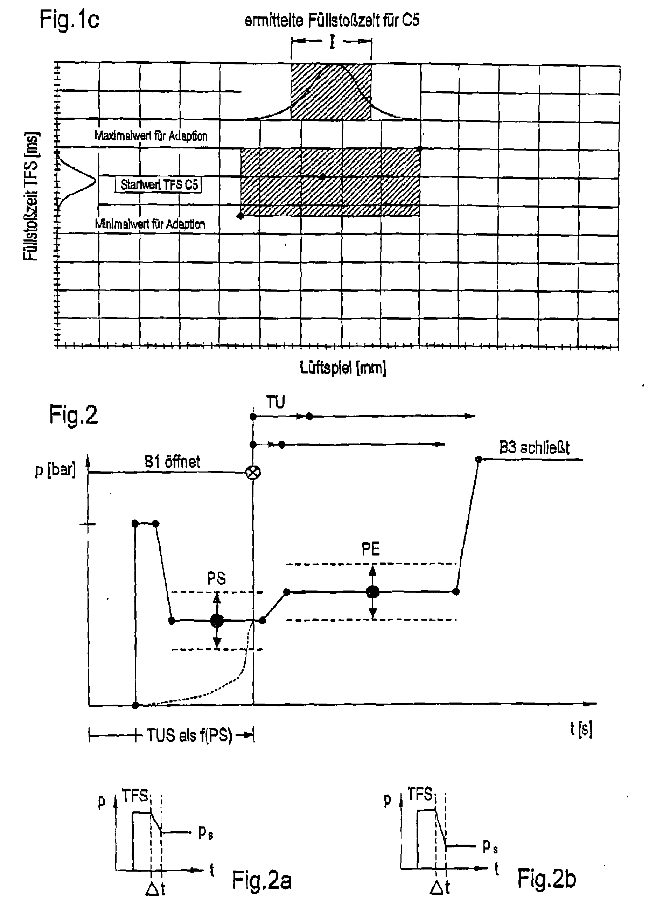

Die Figur 1 verdeutlicht in schematisch vereinfachter Darstellung anhand einer Übersicht über Füllzeiten einzelner beispielhaft ausgeführter Schaltelemente beziehungsweise Stellglieder eines Getriebes die der erfindungsgemäßen Lösung zugrundeliegende Problematik. Der Umschaltvorgang in einem Wechselgetriebe wird durch die Betätigung der die einzelnen Gangstufen beschreibenden Schaltelemente beziehungsweise Stellglieder realisiert. Dabei werden die Stellglieder der kommenden Gangstufe, das heißt der einzulegenden Gangstufe, aktiviert beziehungsweise geschlossen, und die Stellglieder der gehenden Gangstufe, das heißt der zu Beginn des Schaltvorgangs eingelegten Gangstufe, werden gelöst beziehungsweise geöffnet.

Die Stellelemente können beispielsweise die Kupplungen, insbesondere Lamellenkupplungen, in einem Getriebe sein, mittels welchen der Leistungsfluss durch das Getriebe in einer vorbestimmten Übersetzung eingestellt wird. Die Kupplung oder Kupplungen der gehenden Gangstufe wird/werden beim Schalten geöffnet, wohingegen die Kupplung oder Kupplungen der kommenden Gangstufe geschlossen wird/werden.

Den Stellgliedern sind Ventileinrichtungen zugeordnet, um den Druck in dem Stellglied entweder zu erhöhen oder zu erniedrigen. Insbesondere ist bei einer Ausführung der vorliegenden Erfindung jedem Stellglied ein Schaltventil zugeordnet, das insbesondere neben einer Umschaltfunktion von einer Druckleitung auf eine Drucksenke und zurück einen Proportionalbereich aufweist, in welchem das Ausmaß der Öffnung in einem vorbestimmten Bereich gezielt einstellbar ist, um somit über den Öffnungsgrad eine Steuerung des Druckes hinter dem Schaltventil zu erreichen.

Bei einer eingelegten Gangstufe wird der Druck in der Druckleitung, welche Teil eines druckgeregelten Hydraulikkreises sein kann, beziehungsweise der Druck hinter dem Schaltventil und in dem Stellglied auf einen betriebsparameterabhängigen Schaltdruck, der auch als Regeldruck bezeichnet wird, eingeregelt. Die Höhe dieses Schaltdruckes wird dabei derart eingestellt, dass das Stellglied das Antriebsmoment einer dem Getriebe vorgeschalteten Antriebsmaschine ohne Schlupf zum Getriebeausgang sicher überträgt.

Wenn das Getriebe nun aus der eingelegten Gangstufe in eine neue (kommende) Gangstufe geschaltet werden soll, was durch Vorliegen eines entsprechenden Signals erfasst werden kann, so ist es notwendig, das Stellglied der kommenden Gangstufe zunächst zu füllen und anschließend zu betätigen. Erst wenn das Stellglied der kommenden Gangstufe entsprechend zur Übertragung von Drehmoment durch den Druck, mit welchem es beaufschlagt wird, in der Lage ist, soll das Stellglied der gehenden Gangstufe (der bisher eingelegten Gangstufe) geöffnet werden. Ein zu frühes Öffnen des Stellglieds der gehenden Gangstufe kann ein Durchgehen der Antriebsmaschine bewirken. Ein zu spätes Öffnen kann eine Verspannung im Getriebe bewirken, da das Antriebsmoment dann gleichzeitig über die gehende Gangstufe als auch über die kommende Gangstufe übertragen wird, bis das Stellglied der gehenden Gangstufe geöffnet ist.

Es kommt also auf die Einstellung einer exakten Überschneidzeit beziehungsweise im Hinblick auf eine komfortable Schaltung einen exakten Startdruck an, was durch die beschriebenen Fertigungstoleranzen, alterungsbedingte Toleranzen und durch betriebsparameterabhängiges Verhalten des Schaltvorgangs erschwert wird.

Die Figur 1a verdeutlicht beispielsweise anhand eines Druck/Füllzeit-Diagramms den Streubereich der sich ergebenden Füllzeit bei unterschiedlichen Spielen an den Stellgliedern am Beispiel eines Stellgliedes, wie es in unterschiedlichen Getrieben eingesetzt werden kann. Dabei handelt es sich jeweils um das gleiche Stellglied für die gleiche Gangstufe, die in unterschiedlichen Getrieben gleicher Bauart zum Einsatz gelangt. Erkennbar ist, dass der erforderliche Druck für ein minimales Spiel nach einer wesentlich kürzeren Zeit, hier tₘᵢₙ, eingestellt ist, während bei maximalem Spiel, das heißt maximalem Lüftspiel (Kolbenweg beziehungsweise Hub in der Lamellenkupplung) zwischen den einzeln miteinander zu koppelnden Elementen des Schaltelementes bis zum Erreichen des gleichen Druckwertes in Höhe von P₁, eine wesentlich längere Zeit, hier mit tₘₐₓ bezeichnet, vergeht, wobei die Differenz zwischen tₘₐₓ und tₘₗₙ, mit Δt bezeichnet, beispielsweise mehrere Millisekunden beträgt.

Die dünn gezeichnete Linie in dem Diagramm in der Figur 1a beschreibt den eingestellten Steuerdruck beziehungsweise den eingestellten Fülldruck, welcher, wie man sieht, konstant ist. Dieser Fülldruck wird hinter dem Schaltventil eingestellt. Solange das Stellglied noch nicht vollständig befüllt ist, ist der Schaltdruck gegenüber dem Fülldruck vermindert. Erst zum Zeitpunkt tₘᵢₙ beziehungsweise tₘₐₓ erreicht der Schaltdruck den Fülldruck, nämlich bei Vollfüllung des Stellglieds. Leitungsverluste werden vorliegend vernachlässigt.

Die Figur 1b verdeutlicht für eine Vielzahl einzelner Schaltelemente, welche mit LU, C5, BR, B3 und B1 bezeichnet sind, die unterschiedlichen Füllzeiten t in Abhängigkeit der Streuungen, insbesondere des Lüftspiels an den Stellgliedern. Jedem einzelnen Schaltelement ist eine Balkengruppe zugeordnet, die durch drei übereinander angeordnete Balken charakterisiert ist. Der unterste Balken verdeutlicht die Füllstoßzeit TFSₘₐₓ zum Erreichen eines bestimmten vordefinierten Startdruckes pₛ bei minimalem Lüftspiel, der zweite, darüberliegende Balken verdeutlicht die erforderliche Füllstoßzeit TFSₘₐₓ bei maximalem Lüftspiel und der dritte, darüberliegende Balken bestimmt den Arbeitsbereich für die Adaption, das heißt den Unterschiedsbereich, welcher sich bei Differenzbildung aus beiden Balken hinsichtlich der Füllzeit ergibt und durch die Adaption maximal ausgeglichen werden muss.

Die Figur 1c verdeutlicht nochmals die Toleranzen beim Lüftspiel beziehungsweise in der zugehörigen Füllstoßzeit, die aufgrund von Fertigungstoleranzen oder alterungsbedingt in einem Stellglied, hier dem Stellglied C5, auftreten. Das Lüftspiel, das auf der X-Achse aufgetragen ist, beträgt zum Beispiel zwischen 2 und 4 mm, wobei die Verteilung zwischen diesen beiden Grenzwerten durch eine Gauß-Kurve beschrieben werden kann. Es ergibt sich eine Konzentration der durch fertigungsbedingte Toleranzen oder lebensdauerbedingte Toleranzen einstellenden Streuung in einem mittleren Bereich zwischen den beiden genannten Grenzwerten des Lüftspiels. Dieser Bereich ist mit I bezeichnet.

Entsprechend den sich tatsächlich einstellenden Lüftspielen zwischen dem Minimalwert und dem Maximalwert ergibt sich ein Minimalwert und ein Maximalwert für die Adaption des Fülldruckverlaufs, welche erfindungsgemäß erreicht werden können sollte. Aufgrund der Konzentration des Lüftspiels im mittleren Bereich bietet sich an, den Startwert beziehungsweise die Basiskennlinie für die Ansteuerung des Stellglieds in der Mitte zwischen dem Minimalwert für die Adaption und dem Maximalwert für die Adaption festzulegen, siehe die Gauß-Kurve an der Y-Achse.

In der Figur 2 ist nun eine vorteilhafte Möglichkeit einer erfindungsgemäßen Vorgabe eines Fülldruckverlaufs dargestellt. Zunächst wird der Fülldruck sprunghaft auf einen Wert oberhalb des Startdruckwerts pₛ erhöht. Auf diesem erhöhten Wert wird er für eine bestimmte Zeitdauer gehalten. Während dieser Zeitphase ist das Stellglied der gehenden Gangstufe (B1) noch geschlossen, während das Stellglied der kommenden Gangstufe (B3) noch geöffnet ist und mit Hydraulikmedium befüllt wird. Der sich unmittelbar im Stellglied B3 einstellende Schaltdruck ist in einer gepunkteten Linie dargestellt.

Im Anschluss an den erhöhten Fülldruck folgt eine stetige Abnahme des Fülldrucks, welche vorliegend linear ausgeführt ist, bis auf den gewünschten Startdruck pₛ. Wenn der Startdruck pₛ hinter dem Schaltventil erreicht wird, kann entweder noch eine gewisse Zeitspanne zur Befüllung des Stellglieds B3 abgewartet werden, damit auch der Schaltdruck den gewünschten Startdruckwert erreicht (so ist es in der Figur 2 dargestellt), oder die Höhe des Füllstoßes (der Drucküberhöhung des Fülldrucks) beziehungsweise die Steigung der stetigen Druckabnahme wird derart eingestellt, dass das Stellglied B3 der kommenden Gangstufe exakt in jenem Zeitpunkt gefüllt ist, in welchem der Fülldruck den Startdruck von oben kommend erreicht (nicht dargestellt).

Der Startdruck pₛ kann, wie in der Figur 2 durch die gestrichelten Linien angedeutet ist, innerhalb einer bestimmten Bandbreite eingestellt werden. Diese Bandbreite ergibt sich in der Regel durch die fertigungsbedingten, betriebsbedingten oder lebensdauerbedingten Streuungen, welche den Schaltdruckverlauf im Stellglied erheblich beeinflussen können.

Erfindungsgemäß erfolgt die Startdruckeinstellung in Abhängigkeit des aktuell von der Antriebsmaschine abgebbaren Momentes. Dies ist in den Figuren 2a und 2b dargestellt. In der Figur 2a ist eine Fülldruckverlaufskennlinie bei einem hohen Moment und in der Figur 2b bei einem niedrigeren Moment dargestellt. Wie man sieht, ist der Stardruck pₛ bei einem hohen Moment größer als bei einem niedrigen Moment. In beiden Fällen ist die Höhe des Füllstoßes (der ganz linke Bereich im dargestellten Fülldruckverlauf, vorliegend mit TFS bezeichnet) identisch, ebenso wie die zeitliche Dauer dieses Füllstoßes. Auch die zeitliche Dauer der rampenförmigen Verringerung des Fülldrucks, vorliegend mit Δt bezeichnet, ist identisch. Lediglich die Steigung beziehungsweise das Gefälle der Druckverminderung vom Füllstoß auf den Startdruck pₛ ist verschieden, nämlich bei einem niedrigeren Drehmoment (Figur 2b) steiler.

Sowohl in der Figur 2 als auch in den Figuren 2a und 2b ist in den Diagrammen in der ausgezogenen Linie der Sollwert für den Startdruck pₛ dargestellt, wohingegen in der Figur 2 in der gepunkteten Linie der sich tatsächlich einstellende Schaltdruck, der am Ende der Füllzeit zum tatsächlichen Startdruck wird und vorliegend mit dem Sollwert übereinstimmt, dargestellt ist.

Die in der Figur 2 dargestellte Adaption des Startdrucks beziehungsweise des vorgegebenen Fülldruckverlaufs und die in den Figuren 2a und 2b dargestellte Anpassung des Startdrucks an das Drehmoment können gemeinsam ausgeführt werden. Beispielsweise kann für eine Vielzahl von Drehmomenten eine Vielzahl von Fülldruckverlaufskennlinien hinterlegt sein, wobei diese Kennlinien zusätzlich entsprechend der beschriebenen Toleranzen adaptierbar sind. Selbstverständlich ist es alternativ auch möglich, nur eine einzige, beispielsweise hinsichtlich der Toleranzen adaptierbare Kennlinie pro Stellglied zu hinterlegen und die drehmomentabhängige Startdruckeinstellung während des Fahrzeugbetriebs aus dieser Kennlinie abzuleiten, beispielsweise durch Aufaddierung eines drehmomentabhängigen Wertes auf den durch die Kennlinie vorgegebenen Startdruck.

In der Figur 2 bedeutet neben den bereits genannten Größen TU die Zeit bis zum Beginn des Synchronisierungsvorganges, und TUS beschreibt die Überschneidzeit. TU wird als Ansprechzeit bezeichnet und ist von der Größe des Startdruckes pₛ abhängig. Ein höherer Startdruck pₛ verkürzt die Ansprechzeit, wohingegen ein kleinerer Startdruck pₛ die Ansprechzeit verlängert.

Mit PE ist der Regeldruck bezeichnet, das heißt jener Druck, der im Stellglied während der Rutschzeit der Lamellen anliegt.

Die Figur 3 zeigt die Abhängigkeit der Überschneidzeit vom Startdruck pₛ. Die gezeigten Überschneidzeiten variieren dabei im Hinblick auf die gewählte Möglichkeit der Einstellung des Startdruckes pₛ, das heißt in Abhängigkeit des eingestellten Fülldruckverlaufs des Schaltventils, siehe die Piktogramme im Diagramm der Figur 3.

S₁ verdeutlicht eine Kennlinie, wie sie sich ergibt, wenn der Startdruck pₛ ohne vorherigen Füllstoß vom Niveau einer Drucksenke aus eingestellt wird. Demgegenüber verdeutlicht die Kennlinie S₂ die Verhältnisse, wie sie sich bei der Einstellung des Startdruckes pₛ durch Vorschalten eines Füllstoßes mit einer Rechteckgeometrie ergeben. Es ist ersichtlich, dass im ersten Fall (S₁) eine relativ lange Zeitspanne vergeht, bis der Startdruck im Stellglied erreicht wird, während im zweiten Fall (S₂) eine sehr flache Kennlinie erzielt wird. Die flache Kennlinie bedeutet jedoch, dass eine Änderung der Überschneidzeit nur durch eine sehr große Änderung des vorgegebenen Startdruckes pₛ möglich ist. Dies bedeutet jedoch, dass bei einer schrittweisen Adaption eine sehr lange Zeitspanne notwendig ist, bis die gewünschte Überschneidzeit eingestellt ist. Dabei kann die gemessene Ansprechzeit dazu verwendet werden, zu überprüfen, ob die geeignete Überschneidzeit eingestellt worden ist.

Erfindungsgemäß kann eine Startdruckkennlinie S₃ zwischen den beiden Extremzuständen S₁ und S₂ als Basiskennlinie für das Stellglied zugrundegelegt werden. Diese Kennlinie ist, wie beschrieben, durch Anlegen einer Füllstoßrampe mit stetig abfallendem Verlauf realisiert, Ein solcher Verlauf wurde bereits in der Figur 2 wiedergegeben.

Eine gewünschte Adaption kann, auch wenn sie schrittweise durchgeführt wird, wesentlich schneller erfolgen, da neben der Höhe des Füllstoßes auch die Möglichkeit der Anpassung der Steigung der Rampe besteht.

Die erfindungsgemäße Lösung kann für die den einzelnen Gangstufen zugeordneten Schaltelemente separat durchgeführt werden. Die Einstellung der Höhe des Füllpulses und der Geometrie des Fülldruckverlaufes erfolgt vorteilhaft in Abhängigkeit der Gangstufe beziehungsweise der zugeordneten Schaltelemente, da in der Regel die Füll- und Betätigungsvolumina bei den einzelnen Schaltelementen unterschiedlich sind.

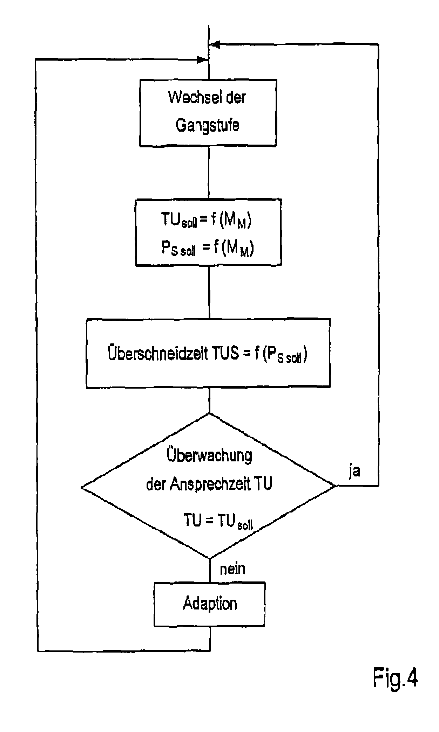

Figur 4 verdeutlicht in schematisiert vereinfachter Darstellung anhand eines Signalflussbildes die mögliche Adaptierung in Abhängigkeit der gemessenen Ansprechzeit TU, die mit einem Sollwert verglichen wird. Zunächst wird der Sollwert des Startdrucks als Funktion des aktuell von der Antriebsmaschine abgebbaren Momentes M_{M} bestimmt. Die Bestimmung kann durch Auswerten einer in einer Steuer- und/oder Regeleinrichtung hinterlegten Kennlinie erfolgen. Eine solche Hinterlegung kann für jedes einzelne Stellglied vorgesehen sein.

Die Kennlinie kann beispielsweise anhand eines Referenzgetriebes für das entsprechende Stellglied aufgenommen und als Basiskennlinie für alle Stellglieder gleichen Typs in zum Referenzgetriebe baugleichen Getrieben hinterlegt werden.

Das von der Antriebsmaschine abgebbare Moment M_{M} wird dabei vorzugsweise fortlaufend ermittelt und bei Vorliegen eines auf einen möglichen Gangwechsel hinweisenden Signals für die Berechnung des Startdrucks zur Verfügung gestellt. Anhand des sich aus dieser Kennlinie ergebenden Sollwertes für den Startdruck kann beispielsweise anhand einer weiteren Basiskennlinie die Überschneidzeit TUS bestimmt werden. Die Überschneidzeit TUS, welche wiederum von der Höhe des Startdruckes pₛ abhängig ist, kann bei Bedarf durch Änderungen des Startdruckes pₛ korrigiert werden. Hierbei kann beispielsweise auf die in der Figur 3 dargestellten Kennlinien zurückgegriffen werden.

## Patentansprüche

1. Verfahren zur Steuerung des Schaltdruckes in Stellgliedern eines elektrohydraulisch gesteuerten Getriebes eines Kraftfahrzeugs mit einer Antriebsmaschine beim Gangstufenwechsel von einer gehenden Gangstufe (B1) zu einer kommenden Gangstufe (B3);
wobei der Schaltdruck über ein Schaltventil dadurch bereitgestellt wird,
dass die Stellglieder wahlweise mittels dem Schaltventil entweder mit einer Drucksenke verbunden werden, um Hydraulikmedium aus dem jeweiligen Stellglied abzuleiten, oder mit einer Druckleitung verbunden werden, um Hydraulikmedium in das Stellglied einzuleiten und so das Stellglied mit dem Hydraulikmedium zunächst in einer Füllphase zu befüllen und in einer sich anschließenden Betätigungsphase durch weitere Zufuhr von Hydraulikmedium zu betätigen,
mit den folgenden Schritten:
1.1 bei Vorliegen eines auf einen Gangstufenwechsel hinweisenden Signals wird das aktuelle von der Antriebsmaschine abgebbare Drehmoment (Mₘ) wenigstens mittelbar erfasst;
1.2 aus dem Drehmoment (Mₘ) wird ein Sollwert für einen Startdruck (Pₛ) des Schaltdruckes des Stellglieds der kommenden Gangstufe (B3) bestimmt, wobei der Startdruck (Pₛ) der Druck im Stellglied am Ende der Füllphase und Anfang der Betätigungsphase ist; wobei
1.3 das Stellglied der gehenden Gangstufe (B1) geöffnet wird, nachdem die Befüllung des Stellglieds der kommenden Gangstufe (B3) begonnen hat oder gerade beendet wird, **dadurch gekennzeichnet, dass**
1.4 die Überschneidzeit vom Beginn des Füllens des Stellglieds der kommenden Gangstufe (B3) und dem Öffnen des Stellglieds der gehenden Gangstufe (B1) in Abhängigkeit des Sollwerts des Startdruckes (Pₛ) durch Einstellen eines vorbestimmten Verlaufes des Fülldruckes, mit welchem das Stellglied der kommenden Gangstufe (B3) während der Füllphase beaufschlagt wird, eingestellt oder variiert wird.

2. Verfahren gemäß Anspruch 1, **dadurch gekennzeichnet, dass** der Sollwert für den Startdruck (Pₛ) als Funktion des von der Antriebsmaschine abgebbaren Drehmoments (Mₘ) in Form einer Kennlinie, eines Kennfeldes oder eines Algorithmus in einer Steuereinrichtung hinterlegt ist, die insbesondere die Stellung des Schaltventils, das insbesondere als elektrisch betätigtes Magnetventil ausgeführt ist, steuert.

3. Verfahren gemäß einem der Ansprüche 1 oder 2, **dadurch gekennzeichnet, dass** die Überschneidzeit vom Beginn des Füllens des Stellglieds der kommenden Gangstufe (B3) und dem öffnen des Stellglied der gehenden Gangstufe (B1) als Funktion des Sollwerts des Startdruckes (Pₛ) als Basiskennlinie in einer Steuereinrichtung hinterlegt ist.

4. Verfahren gemäß einem der Ansprüche 1 bis 3, **dadurch gekennzeichnet, dass** der Sollwert des Startdruckes (Pₛ) zusätzlich in Abhängigkeit von erfassten Betriebsparametern, die sich durch fertigungsbedingte und/oder alterungsbedingte Toleranzen ergeben, variiert wird.

5. Verfahren gemäß Anspruch 4, **dadurch gekennzeichnet dass** eine Ansprechzeit des Stellglieds der kommenden Gangstufe (B3), das heißt der Zeit vom Beginn des Öffnens des Stellglieds der gehenden Gangstufe (B1) bis zur Übertragung eines Drehmoments mit dem Stellglied der kommenden Gangstufe (B3), insbesondere in einem Rutschzustand im Stellglied der kommenden Gangstufe (B3) erfasst wird, und mit einem Sollwert verglichen wird, und bei Abweichung des erfassten Werts vom Sollwert der Sollwert für den Startdruck (Pₛ) verändert wird.

## Claims

1. A method of controlling the switching pressure in actuators of an electro-hydraulically controlled transmission of a motor vehicle fitted with a main engine, when changing gear from a disengaging gear (B1) to an engaging gear (B2);
whereas the switching pressure is made available via a switching valve in such a way that the actuators are connected selectively by means of the switching valve either to a pressure sink, to evacuate the hydraulic medium from the respective member, or are connected to a pressure line, to introduce hydraulic medium into the actuator and thus to fill the actuator with the hydraulic medium first of all in a filling phase and then to actuate it in a subsequent actuating phase by means of an additional supply of hydraulic medium, with the following steps:
1.1 in the presence of a signal indicating a change of gear, the current torque (Mm) which can be generated by the main engine, is detected at least indirectly;
1.2 a setpoint value for a starting pressure (Ps) of the switching pressure of the actuator of the engaging gear (B3) is established from the torque (Mm), whereas the starting pressure (Ps) is the pressure in the actuator at the end of the filling phase and at the beginning of the actuating phase; wherein
1.3 the actuator of the disengaging gear (B1) is opened once the filling of the actuator of the engaging gear (B3) has begun or has just ended, **characterised in that**
1.4 the overlapping time between the beginning of the filling of the actuator of the engaging gear (B3) and the opening of the actuator of the disengaging gear (B1) is adjusted or varied according to the setpoint value of the starting pressure (Ps) by adjusting a predetermined sequence of the filling pressure with which the actuator of the engaging gear (B3) is operated during the filling phase.

2. A method according to claim 1, **characterised in that** the setpoint value for the starting pressure (Ps) is stored as a function of the torque (Mm), which can be generated by the main engine, in the form of a characteristic curve, of a characteristic field or of an algorithm in a control device, which controls in particular the position of the switching valve, which in particular is designed as an electrically actuated solenoid valve.

3. A method according to any of the claims 1 or 2, **characterised in that** the overlapping time between the beginning of the filling of the actuator of the engaging gear (B3) and the opening of the actuator of the disengaging gear (B1) determined as a function of the setpoint value of the starting pressure (Ps) is stored as a basic characteristic curve in a control device.

4. A method according to one of the claims 1 to 3, **characterised in that** the setpoint value of the starting pressure (Ps) is additionally varied depending on established operating parameters, which are derived from manufacture- or ageing-induced tolerances.

5. A method according to claim 4, **characterised in that** a reaction time of the actuator of the engaging gear (B3) is detected, that is to say time from when the actuator of the disengaging gear (B1) begins to open up to the transmission of a torque with the actuator of the engaging gear (B3) in particular in a slipping state in the actuator of the engaging gear (B3) and is compared with a setpoint value, and the setpoint value for the starting pressure (Ps) is modified in case of deviation between the value detected and said setpoint value.

## Revendications

1. Procédé de commande de la pression de commutation dans les actionneurs de la transmission à commande électrohydraulique d'un véhicule automobile disposant d'un moteur principal, lors d'un changement de vitesses entre une vitesse en cours de débrayage (B1) et une vitesse en cours d'embrayage (B2);
où la pression de commutation est fournie par le biais d'une soupape de commutation de telle sorte que les actionneurs sont connectés de manière sélective par le biais de la soupape de commutation soit à un dissipateur de pression, pour évacuer le fluide hydraulique de l'actionneur respectif, soit connectés à un câble de pression, pour introduire le fluide hydraulique dans l'actionneur et ainsi remplir l'actionneur de fluide hydraulique tout d'abord lors d'une phase de remplissage et ensuite le solliciter grâce à une injection supplémentaire de fluide hydraulique lors d'une phase d'actionnement consécutive, comprenant les étapes suivantes :
1.1 en présence d'un signal indiquant un changement de vitesses, le couple de rotation (Mm) actuel, susceptible d'être généré par le moteur principal, est détecté au moins indirectement;
1.2 une valeur de consigne pour la pression de démarrage (Ps) de la pression de commutation de l'actionneur de la vitesse en cours d'embrayage (B3) est déterminée à partir du couple de rotation (Mm), où la pression de démarrage (Ps) est la pression régnant dans l'actionneur à la fin de la phase de remplissage et au début de la phase d'actionnement; dans lequel
1.3 l'actionneur de la vitesse en cours de débrayage (B1) s'ouvre une fois que le remplissage de l'actionneur de la vitesse en cours d'embrayage (B3) a commencé ou vient de se terminer, **caractérisée en ce que**
1.4 l'on règle ou modifie le temps de chevauchement entre le début du remplissage de l'actionneur de la vitesse en cours d'embrayage (B3) et l'ouverture de l'actionneur de la vitesse en cours de débrayage (B1) en fonction de la valeur de consigne de la pression de démarrage (s) en jouant sur la séquence prédéterminée de la pression de remplissage imposée à l'actionneur de la vitesse en cours d'embrayage (B3) pendant la phase de remplissage.

2. Procédé selon la revendication 1, **caractérisé en ce que** la valeur de consigne pour la pression de démarrage (Ps) déterminée en fonction du couple de rotation susceptible d'être généré par le moteur principal (Mm), est rangée dans un dispositif de commande sous forme de courbe caractéristique, de diagramme caractéristique ou d'algorithme, dispositif commandant en particulier la position de la soupape de commutation, laquelle est conçue en particulier comme soupape de commutation à commande électrique.

3. Procédé selon l'une des revendications 1 ou 2, **caractérisé en ce que** le temps de chevauchement entre le début du remplissage de l'actionneur de la vitesse en cours d'embrayage (B3) et l'ouverture de l'actionneur de la vitesse en cours de débrayage (B1), déterminé en fonction de la valeur de consigne de la pression de démarrage (Ps), est rangé dans un dispositif de commande comme courbe caractéristique de base.

4. Procédé selon l'une des revendications 1 à 3, **caractérisé en ce que** l'on modifie la valeur de consigne de la pression de démarrage (Ps) en outre en fonction de paramètres d'exploitation détectés, découlant de tolérances liées à la fabrication et/ou au vieillissement.

5. Procédé selon la revendication 4, **caractérisé en ce que** l'on détecte un temps de réaction de l'actionneur de la vitesse en cours d'embrayage (B3), soit le temps allant du début de l'ouverture de l'actionneur de la vitesse en cours de débrayage (B1) à la transmission d'un couple de rotation avec l'actionneur de la vitesse en cours d'embrayage (B3) en particulier en condition de patinage dans l'actionneur de la vitesse en cours d'embrayage (B3) pour comparer ledit temps de réaction à une valeur de consigne et l'on modifie la valeur de consigne pour la pression de démarrage (Ps) si la valeur détectée s'écarte de ladite valeur de consigne.
